# NEUE EUROPÄISCHE PATENTSCHRIFT

(11) **EP 1 411 244 B2**
(45) Veröffentlichungstag und Bekanntmachung des Hinweises auf die Entscheidung über den Einspruch: **29.08.2018**
(45) Hinweis auf die Patenterteilung: 09.09.2015
(21) Anmeldenummer: 03017152.4
(22) Anmeldetag: 29.07.2003
(51) Int. Cl.: F04B 41/00, F04B 39/00

(54) **Geräuschdämpfungseinrichtung für Luftpresser**
Noise damping device for an air compressor unit
Dispositif pour l'insonorisation d'un compresseur d'air

(30) Priorität: 16.10.2002 DE 10248183
(43) Veröffentlichungstag der Anmeldung: 21.04.2004
(73) Patentinhaber: WABCO GmbH, 30453 Hannover (DE)
(72) Erfinder: Broser, Dietmar, 30419 Hannover (DE); Woltmann, Fritz, 31275 Lehrte (DE)
(74) Vertreter: Bremer, Ulrich

(56) Entgegenhaltungen:
- EP-A- 1 233 183
- US-A- 5 452 919
- US-A- 5 467 595
- US-A- 5 600 953
- US-A- 5 711 150
- US-A- 6 006 520

## Beschreibung

Die Erfindung betrifft eine Geräuschdämpfungseinrichtung nach dem Oberbegriff des Anspruchs 1.

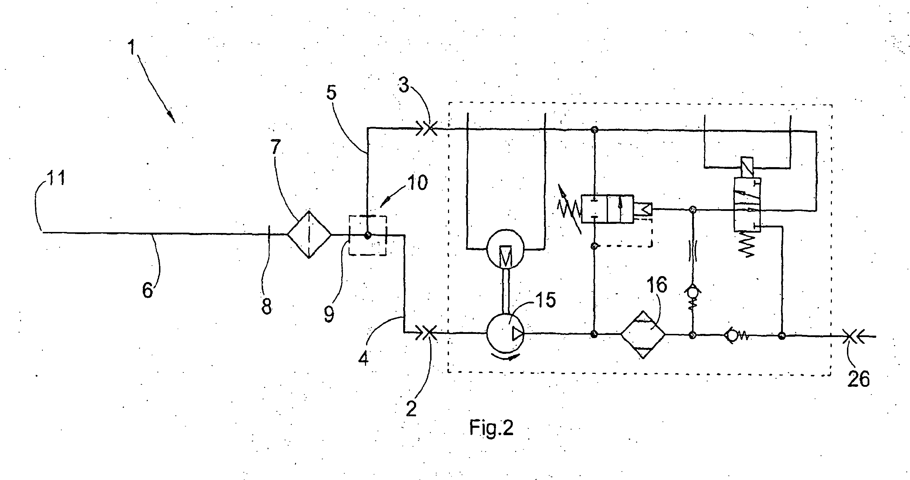

Fig. 2 zeigt eine derartige bekannte, für einen Personenkraftwagen vorgesehene Geräuschdämpfungseinrichtung für den Ansaugtrakt (1) einer kombinierten Funktionseinheit aus Luftpresser (15) und Lufttrockner (16), mit einem Lufteinlaß (2) am Luftpresser und einem Luftauslaß (3) der zum Lufttrockner führt, wobei am Lufteinlaß Funktionseinheiten angeordnet sind, die den Lufteinlaßpfad bilden, und am Luftauslaß die den Luftauslaßpfad bildenden Funktionseinheiten angeordnet sind.

Die Funktionseinheiten des Lufteinlaß- und des Luftauslaßpfades bilden den Ansaugtrakt (1), der als kombinierter Ansaugtrakt ausgebildet ist, indem Funktionseinheiten des Lufteinlaßpfades auch für den Luftauslaßpfad mitbenutzt werden.

Neben dem Lufteinlaß und dem Luftauslaß verfügt die Luftpresser-Lufttrockner-Kombination über einen Druckanschluß (26), über welchen die Luftversorgung einer in dem Pkw installierten pneumatischen Luftfederung erfolgt.

Im kombinierten Ansaugtrakt (1) nach Fig. 2 ist am Lufteinlaß (2) eine erste pneumatische Rohrverbindung (4) vorgesehen, die mit einer T-förmigen pneumatischen Koppelstelle (10) verbunden ist, welche ausgangsseitig mit dem Ausgang (9) eines Luftfilters (7) verbunden ist, dessen Eingang (8) mit einer dritten pneumatischen Rohrverbindung (6) verbunden ist, die schließlich die Verbindung mit der Atmosphäre (11) herstellt; diese Funktionseinheiten stellen den Lufteinlaßpfad dar.

Der Luftauslaß (3) ist über eine zweite pneumatische Rohrverbindung (5) mit der seitlichen Einspeisung der T-förmigen pneumatischen Koppelstelle (10) verbunden, so daß die vom Luftauslaß abgegebene Luft durch den Luftfilter (7) und die dritte pneumatische Rohrverbindung (5) zur Atmosphäre (11) strömt; diese Funktionseinheiten bilden den Luftauslaßpfad.

Der Luftfilter (7) ist als gefaltete Einheit von luftdurchlässigen Papier-Filterelementen aufgebaut, welche die Eigenschaft haben, Schmutzpartikel aus der von der Atmosphäre (11) zum Lufteinlaß (2) strömenden Luft zurückzuhalten, wodurch eine Luftreinigung stattfindet.

Bei einer Luftpresser-Lufttrockner-Kombination (15, 16) dieser bekannten Art erfolgt sowohl das Ansaugen von Luft zum Lufteinlaß durch den Luftpresser zu unterschiedlichen Zeiten, als auch das Abgeben von Luft am Luftauslaß durch den Lufttrockner; so wird der Luftfilter von der Luft aus dem Luftauslaß (3) in unterschiedlicher Richtung durchströmt wie von der Luft, die zum Lufteinlaß gesaugt wird, und auf diese Weise findet eine Selbstreinigung des Luftfilters statt. Die während des Lufteinlaß-Stromes im Luftfilter zurückgehaltenen Schmutzpartikel werden durch die Luftauslaß-Luft wieder an die Atmosphäre abgegeben.

Neben dieser Funktion als selbstreinigendem Filter bewirkt der Luftfilter auch eine Geräuschdämpfung der Luftgeräusche.

Die Luftgeräusche, die während des Ansaugens, und besonders während des Entlüftens (Entlüftungsstoß) entstehen, wirken sehr störend auf die Insassen des Personenkraftfahrzeugs und beeinträchtigen erheblich deren Komfort.

In der erläuterten Weise ist zwar beim Stand der Technik eine Geräuschdämpfung um circa 3 dB(A) erreicht, jedoch kann dieser Zustand noch nicht als durchgehend zufriedenstellend betrachtet werden. Speziell bei Personenkraftwagen der oberen Preisklasse, bei denen pneumatische Luftfederungen bevorzugt eingesetzt werden, und die zum Beispiel auch mit einer hochwertigen HIFI-Musikanlage ausgerüstet sind, ist zur Verbesserung des Komforts der Insassen jede Möglichkeit zu nutzen, zusätzliche störende Geräusche durch die drucklufterzeugende Luftpresser-Lufttrockner-Kombination zu unterdrücken.

Der Erfindung liegt also die Aufgabe zugrunde, die Geräuschdämpfung für einen kombinierten Ansaugtrakt eines Luftpressors/Lufttrockners derart zu verbessern, daß die Geräuschemission weiter vermindert ist.

Diese Aufgabe wird durch die in Patentanspruch 1 und Patentanspruch 4 angegebenen Erfindungen gelöst; Weiterbildungen und vorteilhafte Ausführungsbeispiele der Erfindungen sind in den Unteransprüchen angegeben.

Die Erfindungen haben den Vorteil, daß die erfindungsgemäßen Geräuschdämpfer bei guten Dämpfungseigenschaften sehr kostengünstig herstellbar sind.

Erfindungsgemäß ist der komplette Ansaugtrakt als vorgefertigte kompakte Baueinheit ausgebildet, die durch einfache Steck- und Klemmverbindungen an die Luftpressor-Lufttrockner-Einheit anschließbar ist; weiterhin hat die Erfindung den Vorteil, daß der Großteil der pneumatischen Verbindungen zwischen den Elementen des Ansaugtraktes in der besonders kostengünstigen Aufdorn-Verbindungstechnik gefertigt ist.

Die Erfindung wird im folgenden anhand eines Ausführungsbeispiels, das in der Zeichnung dargestellt ist, näher erläutert.

Es zeigen:
- Fig. 1: eine Prinzipdarstellung des kombinierten Ansaugtraktes zusammen mit der aus einem Luftpresser und einem Lufttrockner bestehenden Drucklufterzeugungsanlage;
- Fig. 2: einen kombinierten Ansaugtrakt entsprechend dem Stand der Technik;
- Fig. 3: eine Gesamtansicht des erfindungsgemäßen kombinierten Ansaugtraktes;
- Fig. 4: die Darstellung der erfindungsgemäßen Dämpfungseinrichtung mit einem in einem Vebindungsschlauch angeordneten Dämpfungseinsatz;
- Fig. 5: eine Erläuterung zur Herstellung des Dämpfungseinsatzes;
- Fig. 6: eine Ausführungsform der Erfindung, bei welcher der Dämpfungseinsatz direkt im Luftfilter selbst angeordnet ist.

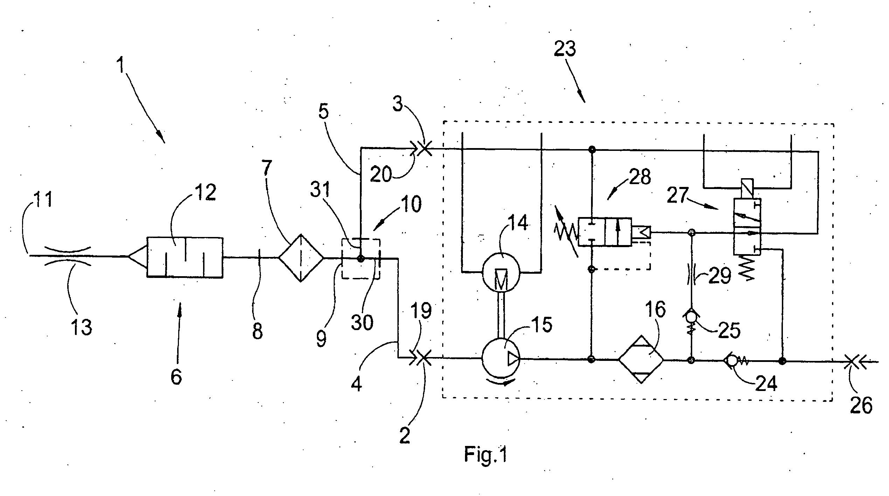

Wie in Fig. 1 gezeigt, besteht die Drucklufterzeugungsanlage (23) aus einem durch einen Elektromotor (14) betriebenen Luftpresser (15), der zusammen mit einem Lufttrockner (16), beispielsweise dem Typ 899 381 295 2 der Fa. WABCO, betrieben wird, und ist für pneumatische Systeme vorgesehen, insbesondere für eine pneumatische Luftfederungsanlage in z. B. einem Personenkraftwagen.

Zum Auffüllen der Luftfederbälge der Luftfederungsanlage zum Zwecke des Anhebens des Fahrzeugaufbaus über den Fahrzeugachsen wird der Elektromotor (14) über eine nicht dargestellte elektrische bzw. elektronische Steuereinheit in Drehung versetzt, und der Luftpresser (15) fördert Luft vom Lufteinlaß (2) über den Lufttrockner (16) und das erste Rückschlagventil (24) zum Druckluftanschluß (26) für den "Verbraucher" des Luftfederungssystems, der streng genommen nicht Luft verbraucht, sondern sie entsprechend der Natur des geschlossenen Luftfederungssystems in die Luftfederbälge einspeist.

Die in dieser Luftpresser-Förderphase erzeugte Druckluft wird dabei in der Kartusche des Lufttrockners (16) getrocknet, was sehr wichtig ist, um ein Einfrieren von gegebenenfalls im Zusammenhang mit der Luftfederungsanlage benötigten Ventilen zu vermeiden. Während dieser Trocknung in der Förderphase nimmt das Granulat der Lufttrockner-Kartusche dabei die in der geförderten Luft enthaltene Feuchtigkeit auf.

Zur Reduzierung der Niveauhöhe des Fahrzeugaufbaus wird die Luftmenge in den Luftfederbälgen reduziert, und diese Luftmenge wird gleichzeitig zur Trocknung des Kartuschen-Granulats benutzt. Hierzu wird von der Steuereinheit das Entlüftungs-Magnetventil (27) geschaltet, was bewirkt, daß am pneumatischen Schalteingang des Entlüftungs-Relaisventils (28) Druck anliegt, welcher die Kraft der Rückstellfeder überwindet und das Ventil auf Durchlaß schaltet.

Die Entlüftung vom Druckluftanschluß (26) findet über den Trocknungspfad, das geöffnete Entlüftungs-Magnetventil (27), die Drossel (29), das gegen seine Schließrichtung geöffnete zweite Rückschlagventil (25), den Lufttrockner (16), das auf Durchlaß geschaltete Entlüftungs-Relaisventil (28) zum Lufttrockner-Luftauslaß (3) statt. Durch die Wirkung der Drossel (29) ist der Trocknungs-Luftstrom durch den Lufttrockner (16) stark reduziert, damit die Regeneration der Lufttrockner-Kartusche mit gutem Wirkungsgrad erfolgt, und der große Luftquerschnitt des geöffneten Entlüftungs-Relaisventils (28) sorgt für eine Staudruck-freie Ableitung der Regenerationsluft zum Luftauslaß (3).

Ergänzt sei, daß am Entlüftungs-Relaisventil (28) über die gezeigte variable Feder-Rückstellung ein variabler Schaltpunkt festlegbar ist, bei dessen Unterschreitung das Entlüftungs-Relaisventil (28) wieder in seinen Sperrzustand übergeht und damit verhindert, daß die Luftfederbälge komplett entlüftet und durch Knittern zerstört werden; damit wird eine Restdruck-Haltefunktion realisiert. Über die gezeigte, vom Lufttrockner (16) gestrichelt gezeichnete pneumatische Vorsteuerungs-Einrichtung ist weiter eine Sicherheitsventil-Funktion realisiert, welche gewährleistet, daß im Rahmen der Luftförderung am Lufttrockner (16) mit Überschreitung einer Luftdruck-Sicherheitsschwelle von z. B. 16 bar das Entlüftungs-Relaisventil (28) öffnet und so eine Schädigung der Anlage vermieden wird.

Es sei darauf hingewiesen, daß die gesamte, über den Druckluftanschluß (26) in das Luftfederungssystem geförderte Druckluft durch Rückspeisung über den Druckluftanschluß (26) auch wieder zur Regeneration des Lufttrockners (16) benutzt werden muß; nur damit ist sichergestellt, daß jeweils ausreichend getrocknete Luft für das Luftfederungssystem bereitgestellt wird. Luftfedersysteme, die zur Verringerung der Niveauhöhe Luft aus den Luftfederbälgen über Ventile direkt in die Atmosphäre entlassen, ohne diese Luft über den Lufttrockner (16) zu leiten, bieten bei Verwendung einer Drucklufterzeugungsanlage (23) der vorstehend erläuterten Bauart nicht die genügende Sicherheit für eine ausreichende Lufttrocknung.

Am Lufteinlaß (2) und Luftauslaß (3) der Drucklufterzeugungsanlage (23) ist ein kombinierter Ansaugtrakt (1) angeschlossen, der im Begriff "kombiniert" bedeutet, daß eine zum Lufteinlaß (2) führende erste pneumatische Verbindung (4) über die Durchgangsbohrung (30) und die seitliche Anschlußbohrung (31) eines T-förmigen pneumatischen Koppelstücks (10) mit einer zum Luftauslaß (3) führenden zweiten pneumatischen Verbindung (5) verbunden ist. Die Durchgangsbohrung (30) des T-Koppelanschlusses (10) führt weiter zum Ausgang (9) des Luftfilters (7), welcher damit in der eingangs erläuterten Art und Weise sowohl von der Ansaugluft zum Lufteinlaß (2) durchströmt wird, womit die im Luftpresser (15) verdichtete Luft gereinigt wird, als auch von der vom Luftauslaß (3) abgegebenen Entlüftungsluft gereinigt wird, damit sich die Mikroporen des Luftfilters (7) nicht dauerhaft durch die Schmutzpartikel aus der Ansaugluft festsetzen.

Am Eingang (8) des Luftfilters (7) ist eine dritte pneumatische Verbingung (6) vorgesehen, welche den Luftfilter-Eingang (8) mit der Atmosphäre (11) verbindet.

Wie erläutert, ist also der kombinierte Ansaugtrakt (1) an die Druckluftversorgungsanlage (23) angeschlossen und er verbindet diese mit der Atmosphäre (11); mit dieser Ankopplung ist jedoch auch eine akustische Kopplung der Atmosphären-Umgebung und damit der Fahrzeuginsassen an die Druckluftversorgungsanlage (23) verbunden.

Die Drucklufterzeugungsanlage (23) erzeugt zweierlei Arten von Geräuschen, Luftpresser-Laufgeräusche und Lufttrockner-Luftgeräusche. Die Laufgeräusche des Luftpressers entstehen überwiegend während der Luftförderung als Laufgeräusche im Motorlager, im Pleuellager und im Bereich des Kolbenrings des Luftpresser-Förderkolbens; hierbei wirkt sich in besonderem Maße aus, daß der Ort des Ansaugens von der Atmosphäre (11) akustisch direkt mit dem Kurbelgehäuse des Luftpressers (15) verbunden ist.

Als Luftgeräusche, die im Rahmen der Lufttrocknung verursacht werden, tritt zum einen ein Pfeifen auf, wenn die Luft während der Lufttrockner-Regeneration aus den Luftfederbälgen, gedrosselt über die Düse (29) zur Atmosphäre (11) hin entweicht. Neben diesen Pfeifgeräuschen gibt es vor allem einen sehr störenden Entlüftungsstoß zu Beginn der Lufttrockner-Regeneration.

Während der Luftpresser-Förderphase liegt am Eingang des Lufttrockners (16) direkt der Förderdruck des Luftpressers (15) von z. B. 16 bar an, und das Volumen der Lufttrockner-Kartusche ist damit mit 16-bar-Luft gefüllt. Aufgrund der guten Dichtwirkung des gesamten Systems bleibt dieser hohe Luftdruck auch noch in der Zeit nach der Luftpresser-Förderung erhalten, und in vielen Fällen steht auch zu Beginn der Relaisventil-Umschaltung (28), für die Einleitung des Lufttrockner-Regenerationsvorganges, das Lufttrockner-Kartuschenvolumen noch unter einem vergleichsweise sehr hohen Druck.

Mit dem Öffnen des Entlüftungs-Relaisventils (28) wird also das unter hohem Druck stehende Lufttrockner-Kartuschenvolumen über den großen freien Querschnitt des geöffneten Entlüftungs-Relaisventils (28) schlagartig über den Luftauslaß (3) und den kombinierten Ansaugtrakt (1) zur Atmosphäre (11) entladen, und erzeugt den erwähnten stark hörbaren Entlüftungsstoß. Neben den vorstehend beschriebenen Laufgeräuschen und dem Entlüftungs-Pfeifen sind die nachstehend beschriebenen Geräuschdämpfungsmaßnahmen vor allem auch dazu vorgesehen, diese stark hörbaren Regenerations-Entlüftungsstöße entsprechend zu dämpfen.

Die dritte pneumatische Verbindung (6) ist selbst als akustische Dämpfungseinrichtung, als Geräuschdämpfer ausgebildet, indem in dieser Verbindung selbst ein geräuschmindernder Dämmwerkstoff (12) eingebracht ist; dieser ist in Fig. 1 mit einem Geräuschdämpfer-Schaltsymbol eingezeichnet.

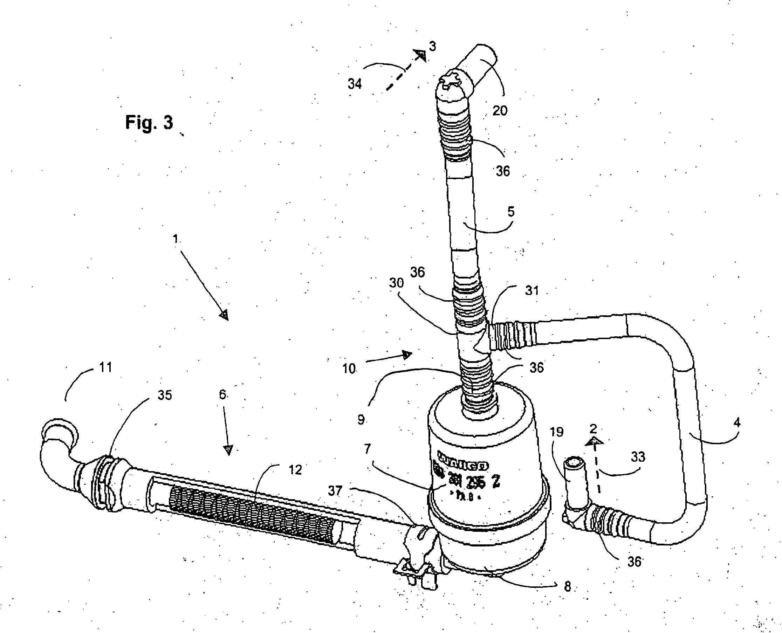

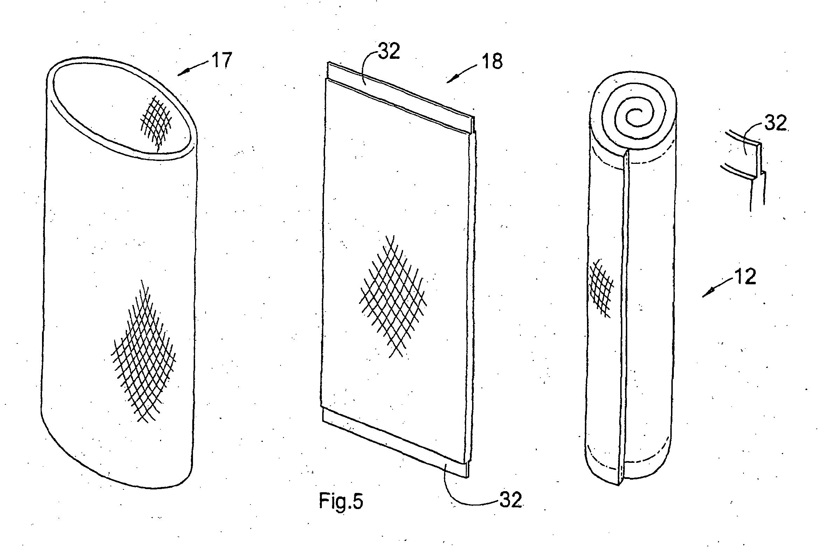

Während die pneumatischen Verbindungen (4, 5, 10) im kombinierten Ansaugtrakt zwischen dem Luftfilter (7) und den Anschlüssen (2, 3) einen einzigen Durchmesser, (d. h. eine Nennweite von z. B. 4 mm) aufweisen (- dieser Durchmesser ist angepaßt an die Luftleistung der Drucklufterzeugungsanlage (23)), ist für die dritte pneumatische Verbindung (6) ein größerer Durchmesser von z. B. 10 mm gewählt. Während die pneumatischen Verbindungen (4, 5, 10) auch als Rohrverbindungen, z. B. in Kunststofftechnik:ausgebildet sein können, ist die dritte pneumatische Verbindung (6) bewußt als flexibler Gummischlauch ausgebildet; dies trägt per se schon zur Geräuschminderung bei, weil die Luftstrom-Luftmoleküle nicht etwa an der glatten und harten Oberfläche eines z. B. Kunststoffrohres reflektiert werden, sondern auf die gebrochene und elastisch nachgiebige Schlauch-Innenfläche treffen, und durch Wechselwirkung ihre Energie verlieren. In Fig. 3 ist anhand eines Teilschnittes durch die dritte pneumatische Verbindung (6) gezeigt, in welcher Weise der geräuschmindernde Dämmwerkstoff (12) in den Verbindungsschlauch (6) eingebracht ist; dieser weist die Form einer in Fig. 5 gezeigten Gestrick-Rolle (12) auf.

Fig. 5 erläutert die Herstellung dieser Gestrick-Rolle (12). Als Grundwerkstoff dient eine schlauchförmige, auf einer Rundstrickmaschine für thermoplastische Werkstoffe hergestellte Gaze, d. h. ein Gestrick von miteinander gekettelten thermoplastischen Fäden mit z. B. einem rechteckigem Querschnitt von 0,02 x 0,08 mm, wobei durch die Kettelung Maschen gebildet werden, mit einer Anzahl von z. B. 30 Maschen pro 100 mm Länge. Wie in Fig. 5 dargestellt, wird in einem ersten Arbeitsgang dieser Gestrickschlauch in einer Länge von z. B. 90 mm abgelängt, wodurch ein Schlauchabschnitt (17) entsteht.

In einem zweiten Arbeitsgang wird der Schlauchabschnitt (17) an seinen Schnittflächen verschweißt (Schweißnähte 32), so daß sich ein rechteckiger Gestrick-Einsatz (18) ausbildet, welcher eine Dicke von 2 bis 2,5 mm aufweist.

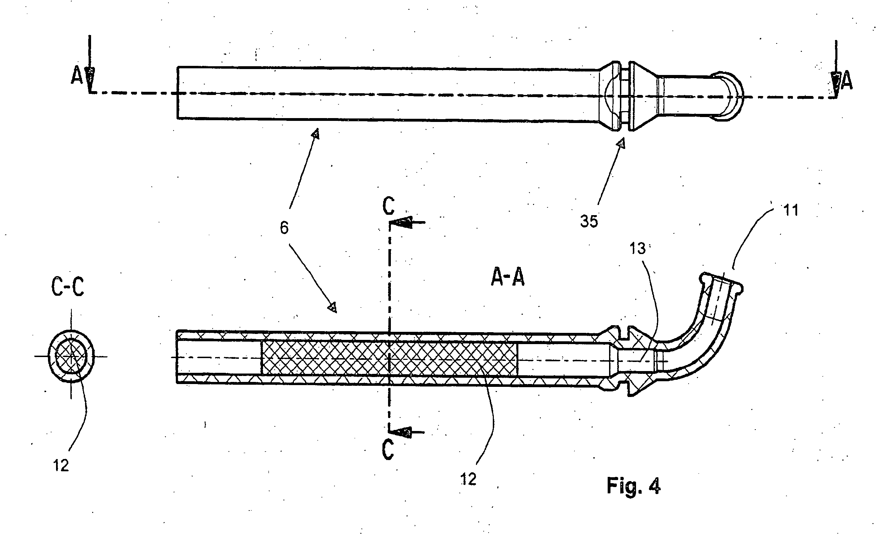

Der Gestrick-Einsatz (18) wird dann über eine seiner Längskanten gerollt, so daß eine Gestrickrolle (12) entsteht. Diese Gestrickrolle (12) wird schließlich in den Verbindungsschlauch (6) eingeschoben und Fig. 4 zeigt die eingeschobene Rolle (12) im Längs- (A-A) und Querschnitt (C-C). Der Vorgang des Einschiebens wird durch die elastische Natur des Verbindungsschlauches (6) vereinfacht; der Verbindungsschlauch wird durch ein geeignetes Spreizwerkzeug aufgeweitet und die Gestrickrolle (12) wird dann mit Hilfe eines weiteren Werkzeugs in den geweiteten Verbindungsschlauch (6) eingeschoben.

Vergleichbar zu bekannten Geräuschdämpfern mit Lochblechen, bei denen Querschnittsveränderungen eine Geräuschdämpfung bewirken, erzeugt bei der Erfindung die in der Verbindung (6) eingebrachte Gestrickrolle (12) die Schalldämpfung dadurch, daß die Luft beim Durchströmen der Verbindung (6) kontinuierlich Querschnittsveränderungen erfährt, wodurch sich Reibungseffekte ergeben, die zur Geräuschdämpfung führen.

Neben der Einfügung der Gestrickrolle (12) in den Verbindungsschlauch (6) ist noch eine weitere Maßnahme zur Geräuschminderung vorgesehen: Wie in Fig. 3 gezeigt, ist der Verbindungsschlauch (6) an seiner Austrittsstelle (11) zur Atmosphäre in seinem Querschnitt auf 6 mm verengt, so daß dort eine Drossel (13) gebildet ist. Diese Drossel bewirkt die Ausbildung eines geringen Staudrucks, sie verringert damit die Strömungsgeschwindigkeit im Verbindungsschlauch (6) und wirkt auf diese Weise zusätzlich geräuschmindernd.

In der folgenden Tabelle ist die akustische Wirkung aller erläuterten Geräuschdämpfungsmaßnahmen zusammengestellt, wie sie an einem mit der Drucklufterzeugungsanlage (23) verbundenen Modell des erfindungsgemäßen kombinierten Ansaugtraktes (1) nach der Erfindung gemessen worden sind:

| | Einzelmaßnahme | betrifft | Verbesserung |
|---|---|---|---|
| | kombinierter Ansaugtrakt, verrohrt ohne weitere Maßnahmen | | 0 dB(A) |
| 1. | Integration Luftfilter (7) | Stand der Technik | 3 dB(A) |
| 2. | Gestrickrolle (12) in Verbindungsschlauch (6) | | 13 dB(A) |
| 3. | Drossel (13) in Verbindungsschlauch (6) | | 3 dB(A) |
| S | Summe aller Maßnahmen | | 19 dB(A) |

Gegenüber einem kombinierten Ansaugtrakt ohne jegliche Geräuschdämpfungsmaßnahme bewirkt der beim Stand der Technik übliche Anschluß des Luftfilters (7) eine Geräuschdämpfung um 3 dB(A). Gegenüber diesem Stand der Technik bewirkt die Gestrickrolle (12) im Verbindungsschlauch (6) eine weiter Geräuschdämpfung um 13 dB(A), und die Drossel (13) verringert den Geräuschpegel dann nochmals um 3 dB(A). Gegenüber dem Stand der Technik ist mit der Erfindung daher eine Geräuschdämpfung von insgesamt 16 dB(A) erreicht, wobei sämtliche Dämpfungsmaßnahmen insgesamt eine Geräuschdämpfung um 19 dB(A) bewirken.

Es sei angemerkt, daß die erläuterte Maschengröße der Gestrickrolle (12) sehr groß gegenüber der Porengröße des Papier-Feinstfilters (7) ist; dadurch wird die eingangs erläuterte Selbstreinigung des Luftfilters (7) durch am Luftauslaß (3) abgegebene Trockner-Regenerationsluft nicht behindert.

Fig. 3 zeigt, daß der kombinierte Ansaugtrakt (1) als kompakte Funktionseinheit aufgebaut ist, er ist mit steckbaren pneumatischen Anschlußelementen, einem mit der ersten pneumatischen Verbindung (4) gekoppelten Anschlußelement (19) zum Einstecken in den Anschluß (2) des Lufteinlasses und einem mit der zweiten pneumatischen Verbindung gekoppelten Anschlußelement (20) zum Einstecken in den Anschluß (3) des Luftauslasses versehen. Diese Einsteckvorgänge zu den entsprechenden Anschlüssen sind in Fig. 3 durch gestrichelte Pfeile (33 und 34) angedeutet.

Im Verbindungsschlauch (6) ist im Bereich des Austritts zur Atmosphäre ein Gummi-Doppelwulst (35) angeformt, der auf sehr einfache Weise zur Befestigung des Verbindungsschlauches (6) in eine schlitzförmige Aufnehmung gesteckt werden kann. Mit diesen Maßnahmen, den Anschlußelementen (19) und (20) und dem Gummi-Doppelwulst (25) läßt sich ein komplett vormontierter Ansaugtrakt zu seiner Montage an die ebenfalls vormontierte Drucklufterzeugungsanlage (23) anstecken bzw. anklemmen.

In Fig. 3 ist weiter eine besonders kostengünstige Verrohrung der Elemente des erfindungsgemäßen kombinierten Ansaugtraktes (1) gezeigt: Das Anschlußelement (19) ist mit der ersten pneumatischen Verbindung (4) und diese ist mit dem Seitenanschluß (31) des T-Stücks (10) in der Art einer pneumatischen Aufdorn-Technik verbunden; in der gleichen Art und Weise sind auch der Luftfilter (7) über seinen Anschluß (9) mit dem Durchgangsanschluß (30) des T-Stücks (10), dieser Durchgangsanschluß mit der zweiten pneumatischen Verbindung (5) und diese Verbindung mit dem Anschlußelement (19) verbunden.

Bei der Aufdorn-Technik wird eine pneumatische Rohrverbindung gleichzeitig als Befestigungsmittel benutzt, indem sie mit einem Werkzeug über das zu koppelnde Element geschoben wird, und damit eine druckfeste Verbindung erzeugt wird; zur Kennzeichnung der Aufdorn-Technik sind die jeweils übergeschobenen Teile einer Verbindung in Fig. 3 als "gefaltete" Elemente (36) gezeichnet. Wann immer möglich, und dies ist zumindest an der Kopplung des Anschlußelementes (19) mit der ersten pneumatischen Verbindung (4) möglich, stellt daher die Aufdorn-Verbindungstechnik eine sehr kostengünstige Verbindungsweise dar. Die Ankopplung an die dritte pneumatische Verbindung, den Druckschlauch (6) kann natürlich nicht in dieser Technik erfolgen, hier ist zur Sicherung des übergeschobenen Verbindungsschlauches (6) eine Klemmschelle (37) verwendet.

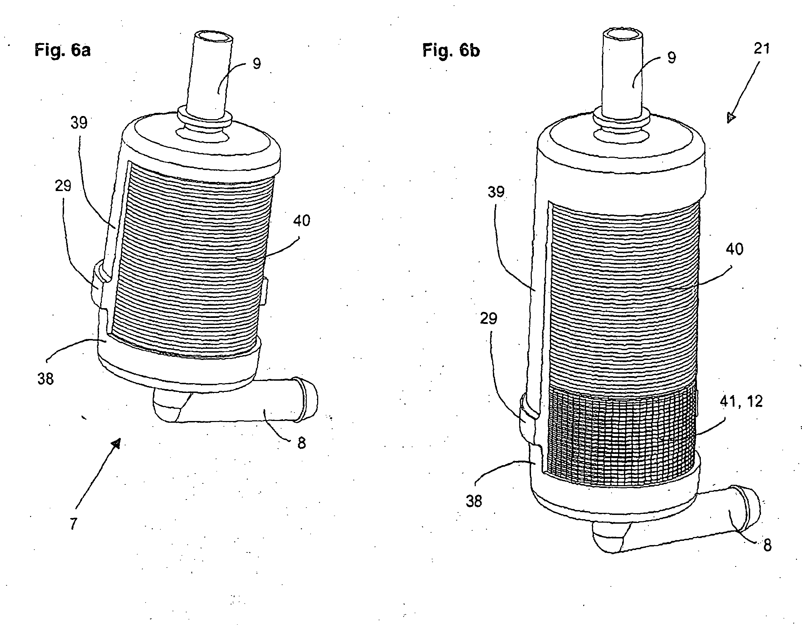

Eine andere Ausbildung der Erfindung ist in Fig. 6 dargestellt; der geräuschmindernde Dämmwerkstoff (12) ist aus dem Verbindungsschlauch (6) in den Luftschilder (7) verschoben, so daß dieser als kombinierte Filter-Geräuschdämpfer-Funktionseinheit (21) ausgebildet ist. In Fig. 6a ist der Luftfilter (7) und in Fig. 6b die Filter-Geräuschdämpfer-Funktionseinheit (21) dargestellt.

Der Luftfilter (7) ist als zylindrischer Hohlkörper mit den oben erläuterten Ein- (8) und Ausgängen (9) die an ein unteres (38) und oberes (39) Gehäuseteil angeformt sind, wobei diese zunächst als Einzelteile (38, 39) vorliegen. Zur Luftfilterung ist eine Einsatzpatrone (40) vorgesehen, welche, wie eingangs erwähnt, aus luftdurchlässigen Papier-Filterelementen aufgebaut ist. Zur Montage des Luftfilters (7) wird die Luftfilter-Einsatzpatrone (40) in den Hohlraum jeweils eines Gehäuseteils (z. B. (38)) eingesteckt, das jeweils andere Gehäuseteil (im Beispiel (39) wird über die eingesteckte Einsatzpatrone (40) gestülpt, und dann werden beide Gehäuseteile (38, 39) durch eine Schweißnaht (29) luftdicht miteinander verbunden.

Bei der Filter-Geräuschdämpfer-Funktionseinheit (21) nach Fig. 6b ist eines der beiden grundsätzlich gleichartig aufgebauten Gehäuseteile (38, 39) - im Beispiel von Fig. 6b ist es das obere Gehäuseteil (39) - in seiner Baulänge derart vergrößert, daß im zylindrischen Innenraum der Funktionseinheit (21), neben der Luftfilter-Einsatzpatrone (40), welche als erste Einsatzpatrone direkt am Ausgang (9) der Funktionseinheit (21) angeordnet ist, eine zweite Einsatzpatrone (41) vorgesehen werden kann, die aus dem erläuterten luftdurchlässigen und geräuschmindernden Dämmwerkstoff (12) aufgebaut ist. Der Dämmwerkstoff (12) ist wiederum aus einem Geflecht von miteinander verbundenen thermoplastischen Kunststoffäden aufgebaut und in ist der erläuterten Form einer Gestrickrolle ausgebildet; diese Gestrickrolle (12) ist nicht mehr ein langer Zylinderkörper mit kleinem Durchmesser, sondern ein kurzer Zylinderkörper mit großem Durchmesser. Die Montage erfolgt wie erläutert durch Einstecken der Einsatzpatronen (40, 41) in die leeren Gehäuseteile (38, 39) und das luftdichte Verschweißen (29) beider Gehäuseteile (38, 39). Auch bei dieser Ausführungsform ist die Geräuschdämmung (12) zwischen Luftfilter (40) und dem Ausgang (11) zur Atmosphäre, des, in der oben erläuterten Weise, an den Eingang (8) der Funktionseinheit (21) angeschlossenen Verbindungsschlauches (6) angeordnet.

Der Verbindungsschlauch (6) ist in der Ausbildung des erfindungsgemäßen kombinierten Ansaugtraktes (1) bei Verwendung einer Filter-Geräuschdämpfer-Funktionseinheit (21) nach Fig. 6b zwar leer, aber aus den oben erläuterten Gründen verfügt er auch bei dieser Ausbildung über die Drossel (13) am Ausgang (11) zur Atmosphäre. Der grundsätzliche Aufbau des kombinierten Ansaugtraktes (1) ist also weiterhin gleichartig zu der in Fig. 3 dargestellten Ausbildung.

Die erste Luftfilter-Einsatzpatrone (40) hat zum Beispiel einen Durchmesser von 40 mm und eine Länge von 60 mm, während die zweite Geräuschdämmungs-Einsatzpatrone (41) bei gleichem Durchmesser eine Länge von zum Beispiel 30 mm aufweist. Bei diesen im Vergleich zu der Ausführungsform nach Fig. 4 größeren Abmessungen für die Dämmwerkstoff-Einsatzpatrone (41) läßt sich die Einsatzpatrone (41) etwas einfacher herstellen, und es ist auch das Einstecken dieser Patrone (41) in das Gehäuse (38, 39) gegenüber dem erläuterten Einschieben der länglichen Gestrickrolle (12) in den Verbindungsschlauch (6) mit der Notwendigkeit seiner Aufweitung durch ein Werkzeug vereinfacht. Diese Ausführungsform weist also im Vergleich zur Ausführung nach Fig. 3 geringere Herstellkosten aus. Ein weiterer Vorteil besteht darin, daß im Gehäuse (38, 39) der Funktionseinheit (21) als solches mehr Raum für den Dämmwerkstoff (12) zur Verfügung steht, als im Verbindungsschlauch (6) für den Dämmwerkstoff (12) nach Fig. 4, so daß ggf. durch Vergrößerung der Dämmwerkstoff-Masse eine weitere Verbesserung der Geräuschdämpfung zu erzielen ist.

## Patentansprüche

1. Geräuschdämpfungseinrichtung für den kombinierten Ansaugtrakt (1) einer für ein Luftverbrauchssystem, insbesondere ein Luftfedersystem vorgesehenen Drucklufterzeugungseinrichtung (23), bestehend aus der Kombination eines Elektromotor-getriebenen (14) Luftpressers (15) und eines Lufttrockners (16), die neben dem Druchluftanschluß (26) für das Luftverbrauchssystem, welcher sowohl für die Belüftung, als auch für die Entlüftung des Luftverbrauchssystems vorgesehen ist, über einen zum Luftpresser (15) führenden Lufteinlaß (2) für das Ansaugen von Luft aus der Atmosphäre (11) und über einen für den Lufttrockner (16) vorgesehenen Luftauslaß (3) zur Abgabe von Lufttrockner-Regenerationsluft an die Atmosphäre (11) verfügt, mit folgenden Merkmalen:
a) Der Lufteinlaß (2) ist mit einer Ansaugeinrichtung (4, 10, 7, 6, 11), und der Luftauslaß (3) ist mit einer Entlüftungseinrichtung (5, 10, 7, 6, 11) verbunden;
b) die Ansaugeinrichtung besteht aus einer zum Ausgang (9) eines Luftfilters (7) führenden ersten pneumatischen Verbindung (4) und einer vom Eingang (8) dieses Luftfilters (7) zur Atmosphäre (11) führenden dritten pneumatischen Verbindung (6) zum Ansaugen von Luft aus der Atmosphäre (11) durch den Luftfilter (7) in der Richtung vom Luftfilter-Eingang (8) zum Luftfilter-Ausgang (9), und von dort zum Lufteinlaß (2) des Luftpressers(15);
c) die Entlüftungseinrichtung besteht aus einer vom Luftauslaß (3) des Lufttrockners (16) zum Ausgang (9) des Luftfilters (7) führenden zweiten pneumatischen Verbindung (5) und der vom Eingang (8) des Luftfilters (7) zur Atmosphäre (11) führenden dritten pneumatischen Verbindung (6) zur Entlüftung von Regenerationsluft in der Lufttrockner-Regenerationsphase durch den Luftfilter (7) in der Richtung vom Luftfilter-Ausgang (9) zum Luftfilter-Eingang (8) und von dort zur Atmosphäre (11);
d) die Ansaugeinrichtung und die Entlüftungseinrichtung sind durch eine im Bereich des Ausgangs (9) des Luftfilters (7) angeordnete pneumatische Koppeleinrichtung (10) pneumatisch miteinander verbunden;
**gekennzeichnet durch** die folgenden Merkmale:
e) Die dritte pneumatische Verbindungseinrichtung ist als Geräuschdämpfer (12) ausgebildet;
f) mindestens eine der pneumatischen Verbindungselemente des kombinierten Ansaugtraktes (1) ist mit einem anderen pneumatischen Verbindungselement dieses Ansaugtraktes in Aufdorntechnik (36) ausgeführt; und
g) der kombinierte Ansaugtrakt (1) ist als kompakt vorgefertigte Einheit ausgebildet, die mit der Drucklüfterzeugungsanlage (23) **durch** Betätigung von Steck- (33, 34) und Klemmverbindungen (37) gekoppelt ist.

2. Geräuschdämpfungseinrichtung nach Anspruch 1, **gekennzeichnet durch** die folgenden Merkmale:
a) Die dritte pneumatische Verbindungseinrichtung (6) ist als elastische Schlauchverbindung ausgebildet;
b) in der dritten pneumatischen Verbindungseinrichtung ist ein luftdurchlässiger, geräuschmindernder Dämmwerkstoff (12) eingebracht.

3. Geräuschdämpfungseinrichtung nach Anspruch 1 oder 2, **dadurch gekennzeichnet, daß** im dritten pneumatischen Verbindungselement, im Bereich zwischen dem Dämmwerkstoff (12) und dem Ausgang zur Atmosphäre (11), eine den Luftdurchlaß verengende Drosseleinrichtung (13) vorgesehen ist.

4. Geräuschdämpfungseinrichtung für den kombinierten Ansaugtrakt (1) einer für ein Luftverbrauchssystem, insbesondere ein Luftfedersystem vorgesehenen Drucklufterzeugungseinrichtung (23), bestehend aus der Kombination eines Elektromotor-getriebenen (14) Luftpressers (15) und eines Lufttrockners (16), die neben dem Druchluftanschluß (26) für das Luftverbrauchssystem, welcher sowohl für die Belüftung, als auch für die Entlüftung des Luftverbrauchssystems vorgesehen ist, über einen zum Luftpresser (15) führenden Lufteinlaß (2) für das Ansaugen von Luft aus der Atmosphäre (11) und über einen für den Lufttrockner (16) vorgesehenen Luftauslaß (3) zur Abgabe von Lufttrockner-Regenerationsluft an die Atmosphäre (11) verfügt, mit folgenden Merkmalen:
a) Der Lufteinlaß (2) ist mit einer Ansaugeinrichtung (4, 10, 7, 6, 11), und der Luftauslaß (3) ist mit einer Entlüftungseinrichtung (5, 10, 7, 6, 11) verbunden;
b) die Ansaugeinrichtung besteht aus einer zum Ausgang (9) eines Luftfilters (7) führenden ersten pneumatischen Verbindung (4) und einer vom Eingang (8) dieses Luftfilters (7) zur Atmosphäre (11) führenden dritten pneumatischen Verbindung (6) zum Ansaugen von Luft aus der Atmosphäre (11) durch den Luftfilter (7) in der Richtung vom Luftfilter-Eingang (8) zum Luftfilter-Ausgang (9), und von dort zum Lufteinlaß (2) des Luftpressers (15);
c) die Entlüftungseinrichtung besteht aus einer vom Luftauslaß (3) des Lufttrockners (16) zum Ausgang (9) des Luftfilters (7) führenden zweiten pneumatischen Verbindung (5) und der vom Eingang (8) des Luftfilters (7) zur Atmosphäre (11) führenden dritten pneumatischen Verbindung (6) zur Entlüftung von Regenerationsluft in der Lufttrockner-Regenerationsphase durch den Luftfilter (7) in der Richtung vom Luftfilter-Ausgang (9) zum Luftfilter-Eingang (8) und von dort zur Atmosphäre (11);
d) die Ansaugeinrichtung und die Entlüftungseinrichtung sind durch eine im Bereich des Ausgangs (9) des Luftfilters (7) angeordnete pneumatische Koppeleinrichtung (10) pneumatisch miteinander verbunden;
**gekennzeichnet durch** die folgenden Merkmale:
e) Der Luftfilter (7) ist als kombinierte Filter-Geräuschdämpfer-Funktionseinheit (21) ausgebildet; und
f) im dritten pneumatischen Verbindungselement (6) ist im Bereich des Ausgangs zur Atmosphäre (11) eine den Luftdurchlaß verengende Drosseleinrichtung (13) vorgesehen.

5. Geräuschdämpfungseinrichtung nach Anspruch 4, **gekennzeichnet durch** die folgenden Merkmale:
a) Im der kombinierten Filter-Geräuschdämpfer-Funktionseinheit (21) sind zwei in Form einer Einsatzpatrone ausgebildete Einheiten vorgesehen;
b) die erste Einheit ist aus luftdurchlässigen Papier-Filterelementen aufgebaut;
c) die zweite Einheit ist aus einem luftdurchlässigen, geräuschmindernden Dämmwerkstoff (12) aufgebaut.

6. Geräuschdämpfungseinrichtung nach mindestens einem der Ansprüche 1 bis 3 oder nach mindestens einem der Ansprüche 4, 5, **dadurch gekennzeichnet, daß** der Dämmwerkstoff (12) als Geflecht von miteinander verbundenen thermoplastischen Kunststoffäden ausgebildet ist.

7. Geräuschdämpfungseinrichtung nach Anspruch 6, **dadurch gekennzeichnet, daß** das Geflecht (12) in Form einer Gestrickrolle ausgebildet ist.

8. Geräuschdämpfungseinrichtung nach mindestens einem der Ansprüche 4 bis 7, **dadurch gekennzeichnet, daß** der kombinierte Ansaugtrakt (1) als kompakt vorgefertigte Einheit ausgebildet ist, die mit der Drucklufterzeugungsanlage (23) durch Betätigung von Steck- (33, 34) und Klemmverbindungen (37) gekoppelt ist.

9. Geräuschdämpfungseinrichtung nach mindestens einem der Ansprüche 4. bis 8, **dadurch gekennzeichnet, daß** mindestens eine der pneumatischen Verbindungselemente des kombinierten Ansaugtraktes (1) mit einem anderen pneumatischen Verbindungselement dieses Ansaugtraktes in Aufdorntechnik (36) ausgeführt ist.

## Claims

1. Noise damping device for the combined intake section (1) of a compressed air generation device (23) which is provided for an air consumption system, in particular a pneumatic spring system, consisting of the combination of an air compressor (15), driven by electric motor (14), and an air dryer (16), which noise damping device, in addition to the compressed air connector (26) for the air consumption system, which compressed air connector (26) is provided both for aeration and ventilation of the air consumption system, has an air inlet (2) which leads to the air compressor (15) for the intake of air from atmosphere (11) and an air outlet (3) which is provided for the air dryer (16) for discharging air dryer regeneration air to atmosphere (11), having the following features:
a) the air inlet (2) is connected to an intake device (4, 10, 7, 6, 11) and the air outlet (3) is connected to a ventilating device (5, 10, 7, 6, 11) ;
b) the intake device consists of a first pneumatic connection (4) which leads to the outlet (9) of an air filter (7) and a third pneumatic connection (6) which leads from the inlet (8) of the said air filter (7) to atmosphere (11) for the intake of air from atmosphere (11) through the air filter (7) in the direction from the air filter inlet (8) to the air filter outlet (9), and from there to the air inlet (2) of the air compressor (15);
c) the ventilating device consists of a second pneumatic connection (5) which leads from the air outlet (3) of the air dryer (16) to the outlet (9) of the air filter (7) and the third pneumatic connection (6) which leads from the inlet (8) of the air filter (7) to atmosphere (11) for the ventilation of regeneration air in the air dryer regeneration phase through the air filter (7) in the direction from the air filter outlet (9) to the air filter inlet (8) and from there to atmosphere (11);
d) the intake device and the ventilating device are connected pneumatically to one another by way of a pneumatic coupling device (10) which is arranged in the region of the outlet (9) of the air filter (7) ;
**characterized by** the following features:
e) the third pneumatic connecting device is confederated as a noise damper (12),
f) at least one of the pneumatic connecting elements of the combined intake section (1) is confederated with another pneumatic connecting element of the said intake section using drifting technology (36); and
g) the combined intake section (1) is confederated as a compactly prefabricated unit which is coupled to the compressed air generation system (23) by way of actuation of plug-in connections (33, 34) and clamping connections (37).

2. Noise damping device according to Claim 1,
**characterized by** the following features:
a) the third pneumatic connecting device (6) is confederated as an elastic hose connection;
b) an air-permeable, noise-reducing insulating material (12) is introduced into the third pneumatic connecting device.

3. Noise damping device according to Claim 1 or 2, **characterized in that** a throttling device (13) which constricts the air passage is provided in the third pneumatic connecting element, in the region between the insulating material (12) and the outlet to atmosphere (11) .

4. Noise damping device for the combined intake section (1) of a compressed air generation device (23) which is provided for an air consumption system, in particular a pneumatic spring system, consisting of the combination of an air compressor (15), driven by electric motor (14), and an air dryer (16), which noise damping device, in addition to the compressed air connector (26) for the air consumption system, which compressed air connector (26) is provided both for aeration and ventilation of the air consumption system, has an air inlet (2) which leads to the air compressor (15) for the intake of air from atmosphere (11) and an air outlet (3) which is provided for the air dryer (16) for discharging air dryer regeneration air to atmosphere (11), having the following features:
a) the air inlet (2) is connected to an intake device (4, 10, 7, 6, 11) and the air outlet (3) is connected to a ventilating device (5, 10, 7, 6, 11) ;
b) the intake device consists of a first pneumatic connection (4) which leads to the outlet (9) of an air filter (7) and a third pneumatic connection (6) which leads from the inlet (8) of the said air filter (7) to atmosphere (11) for the intake of air from atmosphere (11) through the air filter (7) in the direction from the air filter inlet (8) to the air filter outlet (9), and from there to the air inlet (2) of the air compressor (15);
c) the ventilating device consists of a second pneumatic connection (5) which leads from the air outlet (3) of the air dryer (16) to the outlet (9) of the air filter (7) and the third pneumatic connection (6) which leads from the inlet (8) of the air filter (7) to atmosphere (11) for the ventilation of regeneration air in the air dryer regeneration phase through the air filter (7) in the direction from the air filter outlet (9) to the air filter inlet (8) and from there to atmosphere (11);
d) the intake device and the ventilating device are connected pneumatically to one another by way of a pneumatic coupling device (10) which is arranged in the region of the outlet (9) of the air filter (7) ;
**characterized by** the following features:
e) the air filter (7) is configured as a combined filter/noise damper functional unit (21); and
f) a throttling device (13) which constricts the air passage is provided in the third pneumatic connecting element (6), in the region of the outlet to atmosphere (11).

5. Noise damping device according to Claim 4,
**characterized by** the following features:
a) two units in the form of an insertable cartridge are provided in the combined filter/noise damper functional unit (21);
b) the first unit is constructed from air-permeable paper filter elements;
c) the second unit is constructed from an air-permeable, noise-reducing insulating material (12) .

6. Noise damping device according to at least one of the Claims 1 to 3 or according to Claim 4 or 5, **characterized in that** the insulating material (12) is configured as a mesh of thermoplastic threads which are connected to one another.

7. Noise damping device according to Claim 6, **characterized in that** the mesh (12) is configured in the form of a knitted roll.

8. Noise damping device according to at least one of the claims 4 to 7, **characterized in that** the combined intake section (1) is configured as a compactly prefabricated unit which is coupled to the compressed air generation system (23) by way of actuation of plug-in connections (33, 34) and clamping connections (37).

9. Noise damping device according to at least one of the claims 4 to 8, **characterized in that** at least one of the pneumatic connecting elements of the combined intake section (1) is configured with another pneumatic connecting element of the said intake section using drifting technology (36).

## Revendications

1. Dispositif d'insonorisation pour la ligne d'aspiration combinée (1) d'un dispositif de production d'air comprimé (23) prévu pour un système de consommation d'air, en particulier un système d'amortisseur pneumatique, se composant de la combinaison d'un compresseur d'air (15) entraîné par un moteur électrique (14) et d'un sécheur d'air (16), qui dispose, en plus du raccordement d'air comprimé (26) pour le système de consommation d'air, qui est prévu aussi bien pour l'aération que pour la purge du système de consommation d'air, d'une entrée d'air (2) conduisant au compresseur d'air (15) pour l'aspiration d'air à partir de l'atmosphère (11) et d'une sortie d'air (3) prévue pour le sécheur d'air (16) pour le rejet d'air de régénération du sécheur d'air dans l'atmosphère (11), présentant les caractéristiques suivantes:
a) l'entrée d'air (2) est reliée à un dispositif d'aspiration (4, 10, 7, 6, 11) et la sortie d'air (3) est reliée à un dispositif de purge (5, 10, 7, 6, 11);
b) le dispositif d'aspiration se compose d'une première liaison pneumatique (4) conduisant à la sortie (9) d'un filtre à air (7) et d'une troisième liaison pneumatique (6) conduisant de l'entrée (8) de ce filtre à air (7) à l'atmosphère (11), pour l'aspiration d'air à partir de l'atmosphère (11) à travers le filtre à air (7) dans la direction de l'entrée du filtre à air (8) à la sortie du filtre à air (9), et de là à l'entrée d'air (2) du compresseur d'air (15);
c) le dispositif de purge se compose d'une deuxième liaison pneumatique (5) conduisant de la sortie d'air (3) du sécheur d'air (16) à la sortie (9) du filtre à air (7) et de la troisième liaison pneumatique (6) conduisant de l'entrée (8) du filtre à air (7) à l'atmosphère (11) pour la purge d'air de régénération dans la phase de régénération du sécheur d'air à travers le filtre à air (7) dans la direction de la sortie du filtre à air (9) à l'entrée du filtre à air (8) et de là à l'atmosphère (11) ;
d) le dispositif d'aspiration et le dispositif de purge sont reliés pneumatiquement l'un à l'autre par un dispositif de couplage pneumatique (10) disposé dans la région de la sortie (3) du filtre à air (7);
**caractérisé par** les caractéristiques suivantes:
e) le troisième dispositif de liaison pneumatique est réalisé sous la forme d'un silencieux (12);
f) au moins un des éléments de liaison pneumatiques de la ligne d'aspiration combinée (1) avec un autre élément de liaison pneumatique de cette ligne d'aspiration est exécuté par la technique de mandrinage (36); et
g) la ligne d'aspiration combinée (1) est réalisée sous la forme d'une unité préfabriquée compacte, qui est couplée à l'installation de production d'air comprimé (23) par actionnement de liaisons par engagement (33, 34) et par serrage (37).

2. Dispositif d'insonorisation selon la revendication 1, **caractérisé par** les caractéristiques suivantes:
a) le troisième dispositif de liaison pneumatique (6) est réalisé sous la forme d'une liaison par tuyau souple élastique;
b) un matériau d'amortissement (12) réduisant le bruit et perméable à l'air est introduit dans le troisième dispositif de liaison pneumatique.

3. Dispositif d'insonorisation selon la revendication 1 ou 2, **caractérisé en ce qu'**il est prévu dans le troisième élément de liaison pneumatique, dans la région comprise entre le matériau d'amortissement (12) et la sortie vers l'atmosphère (11), un dispositif d'étranglement (13) réduisant le passage d'air.

4. Dispositif d'insonorisation pour la ligne d'aspiration combinée (1) d'un dispositif de production d'air comprimé (23) prévu pour un système de consommation d'air, en particulier un système d'amortisseur pneumatique, se composant de la combinaison d'un compresseur d'air (15) entraîné par un moteur électrique (14) et d'un sécheur d'air (16), qui dispose, en plus du raccordement d'air comprimé (26) pour le système de consommation d'air, qui est prévu aussi bien pour l'aération que pour la purge du système de consommation d'air, d'une entrée d'air (2) conduisant au compresseur d'air (15) pour l'aspiration d'air à partir de l'atmosphère (11) et d'une sortie d'air (3) prévue pour le sécheur d'air (16) pour le rejet d'air de régénération du sécheur d'air dans l'atmosphère (11), présentant les caractéristiques suivantes:
a) l'entrée d'air (2) est reliée à un dispositif d'aspiration (4, 10, 7, 6, 11) et la sortie d'air (3) est reliée à un dispositif de purge (5, 10, 7, 6, 11);
b) le dispositif d'aspiration se compose d'une première liaison pneumatique (4) conduisant à la sortie (9) d'un filtre à air (7) et d'une troisième liaison pneumatique (6) conduisant de l'entrée (8) de ce filtre à air (7) à l'atmosphère (11), pour l'aspiration d'air à partir de l'atmosphère (11) à travers le filtre à air (7) dans la direction de l'entrée du filtre à air (8) à la sortie du filtre à air (9), et de là à l'entrée d'air (2) du compresseur d'air (15);
c) le dispositif de purge se compose d'une deuxième liaison pneumatique (5) conduisant de la sortie d'air (3) du sécheur d'air (16) à la sortie (9) du filtre à air (7) et de la troisième liaison pneumatique (6) conduisant de l'entrée (8) du filtre à air (7) à l'atmosphère (11) pour la purge d'air de régénération dans la phase de régénération du sécheur d'air à travers le filtre à air (7) dans la direction de la sortie du filtre à air (9) à l'entrée du filtre à air (8) et de là à l'atmosphère (11) ;
d) le dispositif d'aspiration et le dispositif de purge sont reliés pneumatiquement l'un à l'autre par un dispositif de couplage pneumatique (10) disposé dans la région de la sortie (3) du filtre à air (7);
**caractérisé par** les caractéristiques suivantes:
e) le filtre à air (7) est réalisé sous la forme d'une unité fonctionnelle combinée filtre-silencieux (21) ; et
f) il est prévu dans le troisième élément de liaison pneumatique (6), dans la région de la sortie à l'atmosphère (11), un dispositif d'étranglement (13) réduisant le passage d'air.

5. Dispositif d'insonorisation selon la revendication 4, **caractérisé par** les caractéristiques suivantes:
a) dans l'unité fonctionnelle combinée filtre-silencieux (21), il est prévu deux unités réalisées sous la forme d'une cartouche d'insertion;
b) la première unité est constituée d'éléments de filtre en papier perméables à l'air;
c) la deuxième unité est constituée d'un matériau d'amortissement (12) réduisant le bruit et perméable à l'air.

6. Dispositif d'insonorisation selon au moins une des revendications 1 à 3 ou selon au moins une des revendications 4 ou 5, **caractérisé en ce que** le matériau d'amortissement (12) est réalisé sous la forme d'un tissage de fibres synthétiques thermoplastiques assemblées les unes aux autres.

7. Dispositif d'insonorisation selon la revendication 6, **caractérisé en ce que** le tissage (12) est réalisé sous la forme d'un rouleau tricoté.

8. Dispositif d'insonorisation selon au moins une des revendications 4 à 7, **caractérisé en ce que** la ligne d'aspiration combinée (1) est réalisée sous la forme d'une unité préfabriquée compacte, qui est couplée à l'installation de production d'air comprimé (23) par actionnement de liaisons par engagement (33, 34) et par serrage (37).

9. Dispositif d'insonorisation selon au moins une des revendications 4 à 8, **caractérisé en ce qu'**au moins un des éléments de liaison pneumatiques de la ligne d'aspiration combinée (1) avec un autre élément de liaison pneumatique de cette ligne d'aspiration est exécuté par la technique de mandrinage (36).
